(19) **Europäisches Patentamt / European Patent Office / Office européen des brevets**

(11) **EP 4 775 624 A1**

(12) **EUROPEAN PATENT APPLICATION**
published in accordance with Art. 153(4) EPC

(43) Date of publication:
**15.07.2026 Bulletin 2026/29**

(21) Application number: **24862917.2**

(22) Date of filing: **06.09.2024**

(51) International Patent Classification (IPC):
*C08J 11/10* (2006.01)

(52) Cooperative Patent Classification (CPC):
**C08J 11/10;** Y02W 30/62

(86) International application number:
**PCT/JP2024/032081**

(87) International publication number:
**WO 2025/053268 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023145949**

(71) Applicant: UBE Corporation
**Ube-shi, Yamaguchi 755-8633 (JP)**

(72) Inventors:
- **TAKAMA, Akira**
  **Ichihara-shi, Chiba 290-0045 (JP)**
- **YAMASHITA, Jun**
  **Ichihara-shi, Chiba 290-0045 (JP)**
- **KIMIZUKA, Yuta**
  **Ichihara-shi, Chiba 290-0045 (JP)**
- **NARITA, Kazutaka**
  **Ichihara-shi, Chiba 290-0045 (JP)**

(74) Representative: Hoffmann Eitle
**Patent- und Rechtsanwälte PartmbB**
**Arabellastraße 30**
**81925 München (DE)**

(54) **RESIN RECOVERY METHOD**

(57) The method of recovering resin of the present invention is a method of recovering resin from a composite including a layer (A) including a nonhydrolyzable resin (a1) and a layer (B) including a hydrolyzable resin (b1),
the method including: a step (1) of bringing the composite into contact with a subcritical fluid, and decomposing and/or separating the layer (A) and the layer (B) to obtain a solid resin (A) consisting of a nonhydrolyzable resin (a2) and a solid resin (B) consisting of a hydrolyzable resin (b2), wherein the nonhydrolyzable resin (a1) and the nonhydrolyzable resin (a2) are identical or differ only in their molecular weight distribution, and the hydrolyzable resin (b1) and the hydrolyzable resin (b2) are identical or differ only in their molecular weight distribution.

Fig. 1

EP 4 775 624 A1

**Description**

[Technical Field]

The present invention relates to a method of recovering resin from a composite containing a plurality of resins.

[Background Art]

In view of growing concerns over environmental problems and the effective use of resources, reuse of resin products has been required.

Films used for packaging, which are resin products, are generally composites of several kinds of resin, such as multilayer films. To reuse these composites, it is necessary to sort and recover the resins from the composites according to the types of resin.

In Patent Literature 1, a laminate composed of a polyolefin layer and a layer of a foreign substance selected from a water-soluble substance or a hydrolyzable substance other than polyolefin is heated at 200 to 400°C under a specific pressure, and then treated with water, whereby only the foreign substance is dissolved in the water and the polyolefin is recovered.

In Patent Literature 2, a polyolefin resin film containing an organic substance other than polyolefin resins is heated at 200 to 350°C under a specific pressure and treated with water, thereby hydrolyzing the organic substance other than the polyolefin resin and recovering the polyolefin resin.

In Patent Literature 3, a solid composite material composed of two or more organic polymer compounds is hydrolyzed using water in a supercritical state as a solvent. After the organic liquid and the organic solid are separated, the organic solid is recovered, and the separated organic liquid is fractionally separated and recovered by a fractional distillation method according to the type of material.

In Patent Literature 4, a resin layer of a hydrolyzable polymer and a resin layer of a nonhydrolyzable polymer are decomposed and separated by a hydrothermal reaction under specific conditions, and the hydrolyzable polymer is hydrolyzed into a monomer and the monomer is separated and recovered, while the nonhydrolyzable polymer is separated and recovered with its molecular weight maintained.

[Citation List]

[Patent Literature]

    [Patent Literature 1] JP-A-H08-92411
    [Patent Literature 2] JP-A-H11-35734
    [Patent Literature 3] JP-A-2001-316518
    [Patent Literature 4] JP-A-2023-1085

[Summary of Invention]

[Technical Problem]

In Patent Literatures 1 to 4, nonhydrolyzable resins such as polyolefin resins are recovered as resins and can be directly subjected to material recycling. In contrast, hydrolyzable resins such as polyamide resins are decomposed into monomers and dissolved in water, and therefore cannot be subjected to material recycling. To recover the monomers instead, a fractional distillation method must be performed; however, the operation is difficult due to bumping and other issues.

A first aspect of the present invention is directed to separating and recovering a hydrolyzable resin and a nonhydrolyzable resin, in resin form, from a composite containing the hydrolyzable resin and the nonhydrolyzable resin.

A second aspect of the present invention is directed to separating and recovering, in resin form, a hydrolyzable resin from a molded body containing the hydrolyzable resin.

A third aspect of the present invention is directed to separating and recovering, in resin form, a nonhydrolyzable resin from a molded body containing the nonhydrolyzable resin.

[Solution to Problem]

The present invention provides, for example, the following [1] to [14].

[1] A method of recovering resin from a composite comprising a layer (A) comprising a nonhydrolyzable resin (a1) and a layer (B) comprising a hydrolyzable resin (b1), the method comprising:

a step (1) of bringing the composite into contact with a subcritical fluid, and
decomposing and/or separating the layer (A) and the layer (B) to obtain a solid resin (A) consisting of a nonhydrolyzable resin (a2) and a solid resin (B) consisting of a hydrolyzable resin (b2),
wherein the nonhydrolyzable resin (a1) and the nonhydrolyzable resin (a2) are identical or differ only in their molecular weight distribution, and
the hydrolyzable resin (b1) and the hydrolyzable resin (b2) are identical or differ only in their molecular weight distribution.

[2] The method of recovering resin according to [1], further comprising a recovery step (2) of sorting and recovering the solid resin (A) and the solid resin (B) obtained in the step (1) through a filter.
[3] The method of recovering resin according to [1], further comprising a recovery step (2) of sorting and recovering the solid resin (A) and the solid resin (B) obtained in the step (1) based on a difference in specific gravity between the solid resin (A) and the solid resin (B).
[4] The method of recovering resin according to any of [1] to [3], wherein when the number-average molecular weight of the hydrolyzable resin (b1) is taken as Mnl and the number-average molecular weight of the hydrolyzable resin (b2) is taken as Mn2, the ratio of Mn2 to Mn1 (Mn2/Mn1) is 0.15 or more, and Mn2 is 2,300 or more.
[5] The method of recovering resin according to any of [1] to [4], wherein the time for contacting the composite with the subcritical fluid in the step (1) is 1 to 60 minutes.
[6] The method of recovering resin according to any of [1] to [5], wherein the nonhydrolyzable resins (a1) and (a2) are polyolefin resins.
[7] The method of recovering resin according to any of [1] to [6], wherein the hydrolyzable resins (b1) and (b2) are polyamide resins or polyester resins.
[8] The method of recovering resin according to any of [1] to [7], wherein the composite is waste plastic.
[9] A method of recovering resin from a molded body comprising a hydrolyzable resin (b1),
the method comprising: a step of bringing the molded body into contact with a subcritical fluid to obtain a solid resin (B) consisting of a hydrolyzable resin (b2), wherein the hydrolyzable resin (b1) and the hydrolyzable resin (b2) are identical or differ in their molecular weight distribution.
[10] A method of recovering resin from a molded body comprising a nonhydrolyzable resin (a1), the method comprising:

a step of bringing the molded body into contact with a subcritical fluid to obtain a solid resin (A) consisting of a nonhydrolyzable resin (a2),
wherein the nonhydrolyzable resin (a1) and the nonhydrolyzable resin (a2) are identical or differ in their molecular weight distribution.

[11] A material-recycled product comprising, as a raw material, the nonhydrolyzable resin (a2) recovered by the method of recovering resin according to any of [1] to [8] and [10].
[12] A material-recycled product comprising, as a raw material, the hydrolyzable resin (b2) recovered by the method of recovering resin according to any of [1] to [9].
[13] A method for producing a material-recycled product, comprising conducting material recycling using, as a raw material, the nonhydrolyzable resin (a2) recovered by the method of recovering resin according to any of [1] to [8] and [10].
[14] A method for producing a material-recycled product, comprising conducting material recycling using, as a raw material, the hydrolyzable resin (b2) recovered by the method of recovering resin according to any of [1] to [9].

[Advantageous Effects of Invention]

According to the first aspect of the present invention, a hydrolyzable resin and a nonhydrolyzable resin can be separated and recovered from a composite containing the hydrolyzable resin and the nonhydrolyzable resin, in resin form.
According to the second aspect of the present invention, a hydrolyzable resin can be separated and recovered from a molded body containing the hydrolyzable resin, in resin form.

According to the third aspect of the present invention, a nonhydrolyzable resin can be separated and recovered from a molded body containing the nonhydrolyzable resin, in resin form.

[Brief Description of Drawing]

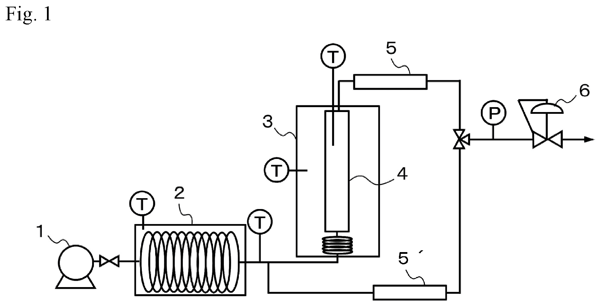

[Fig. 1] Fig. 1 illustrates an example of an apparatus for carrying out the method of recovering resin of the present invention.

[Description of Embodiments]

The first aspect of the present invention is directed to a method of recovering resin from a composite comprising a layer (A) comprising a nonhydrolyzable resin (a1) and a layer (B) comprising a hydrolyzable resin (b1), the method comprising: a step (1) of bringing the composite into contact with a subcritical fluid, and decomposing and/or separating the layer (A) and the layer (B) to obtain a solid resin (A) consisting of a nonhydrolyzable resin (a2) and a solid resin (B) consisting of a hydrolyzable resin (b2), wherein the nonhydrolyzable resin (a1) and the nonhydrolyzable resin (a2) are identical or differ only in their molecular weight distribution, and the hydrolyzable resin (b1) and the hydrolyzable resin (b2) are identical or differ only in their molecular weight distribution.

In the present description, the solid resin refers to a resin that is solid at 25°C and 1 atm.

<Step (1)>

In the step (1), a composite comprising a layer (A) comprising a nonhydrolyzable resin (a1) and a layer (B) comprising a hydrolyzable resin (b1) is brought into contact with a subcritical fluid. In the step (1), the layer (A) and the layer (B) are decomposed and/or separated to obtain a solid resin (A) consisting of a nonhydrolyzable resin (a2) and a solid resin (B) consisting of a hydrolyzable resin (b2).

Herein, the phrase "consisting of" means that no components other than those contained in the composite are included. Preferably, it means that no components other than trace impurities are contained, and more preferably, it means "consisting only of."

The term "composite" refers to a structure in which two or more resin or resin-composition layers are joined directly or through an adhesive or the like to form an integral body. Examples include laminates and bonded bodies. The composite includes a layer (A) and a layer (B). The layer (A) and the layer (B) may be adjacent to or bonded to each other, or they may be separated from each other. The composite may include layers other than the layers (A) and (B), and may also include other structures. For example, the composite may optionally include an inorganic substance layer in addition to the layer (A) and the layer (B).

Preferably the nonhydrolyzable resin (a1) is the main component in the layer (A), and the hydrolyzable resin (b1) is the main component in the layer (B).

The expression "the nonhydrolyzable resin (a1) is the main component in the layer (A)" means that the nonhydrolyzable resin (a1) accounts for the largest proportion by mass among all components of the composition constituting the layer (A). Specifically, it means that, based on 100% by mass of the composition constituting the layer (A), the nonhydrolyzable resin (a1) accounts for 50% by mass or more, preferably 70% by mass or more, and more preferably 95% by mass or more, including 100% by mass, that is, the layer (A) consisting only of the nonhydrolyzable resin (a1). The same applies to the expression "the hydrolyzable resin (b1) is the main component in the layer (B)."

The nonhydrolyzable resin refers to a resin whose bonds are not hydrolyzed or are difficult to hydrolyze. Nonhydrolyzable thermoplastic resins are preferred, and examples thereof include polyolefin resins such as polyethylene resins including low-density polyethylene (LDPE) resin, linear low-density polyethylene (LLDPE) resin, and high-density polyethylene (HDPE) resin, and polypropylene resin, halogenated polyolefins such as tetrafluoroethylene, ethylene/tetrafluoroethylene copolymer, and polyvinyl chloride, ethylene-vinyl acetate copolymer, acrylic resin, polystyrene resin, acrylonitrile-butadiene-styrene copolymer, and acrylonitrile-styrene copolymer. One or more of them may be used. Among them, polyolefin resins are preferred.

The hydrolyzable resin refers to a resin in which at least part of the bonds are hydrolyzable. For example, preferred resins include those having an ester bond, an amide bond, an imide bond, an ether bond, a urethane bond, a carbonate bond, an acetal bond, a hemiacetal bond, a ketal bond, a hemiketal bond, or a bond in which some or all of the oxygen atoms in these bonds are replaced with sulfur atoms. Usually, resins in which at least part of the main-chain bonds are hydrolyzable are preferably used. Preferred examples include hydrolyzable thermoplastic resins such as polyamide resins, polyester resins, polyurethane resins, polycarbonate resins, polyacetal resins, polyether resins, and phenolic resins. One or more of them may be used. Among them, polyamide resins and polyester resins are preferred, and polyamide resins are more preferred.

Examples of polyamide resins include aliphatic homopolyamide resins, aliphatic copolyamide resins, semi-aromatic homopolyamide resins, semi-aromatic copolyamide resins, aromatic homopolyamide resins, and aromatic copolyamide resins. Examples of raw material monomers for polyamide resins include lactam compounds, aminocarboxylic acids, and combinations of diamines and dicarboxylic acids. The semi-aromatic polyamide resin refers to a polyamide resin having a repeating unit derived from a combination of a diamine and a dicarboxylic acid, in which one of the diamine and the dicarboxylic acid is aliphatic and the other is aromatic.

Specific examples of polyamide resins include, but are not limited to, polyamide 410, polyamide 6, polyamide 56, polyamide 66, polyamide 610, polyamide 612, polyamide 11, polyamide 12, polyamide 56/6, polyamide 6/66, polyamide 6/12, polyamide 6/66/12, polyamide 9T, polyamide 6T, polyamide 6I, polyamide MXD6, polyamide 66/6T, polyamide 6T/6, polyamide 66/6I, polyamide 6I/6, polyamide 12/6T, polyamide 66/6T/6I, polyamide 66/6/6I, polyamide 6T/6I, and polyamide 6T/M5T.

Examples of combinations of the nonhydrolyzable resin (a1) and the hydrolyzable resin (b1) include the above-mentioned combinations of resins, and preferred combinations are a polyolefin resin with a polyamide resin and a polyolefin resin with a polyester resin.

Examples of optional inorganic substance layers include a metal layer that imparts gas barrier properties, aroma retention properties, and light reflection properties, and a hard coat layer that provides scratch resistance. The metal layer is not particularly limited, but examples include layers of aluminum, silicon, a copper-nickel-chromium combination, gold, palladium, tin, ruthenium, black trivalent chromium, and tin-cobalt alloy. The hard coat layer is not particularly limited, but examples include ceramic layers mainly composed of metal oxides such as alumina, silica, zirconia, and titania.

The layer (A), the layer (B) and other structures constituting the composite may appropriately contain, as optional components, functional additives such as dyes, pigments, fiber reinforcements, particle reinforcements, plasticizers, antioxidants, heat stabilizers, foaming agents, weathering agents, crystal nucleating agents, crystallization accelerators, mold release agents, lubricants, antistatic agents, flame retardants, flame retardant auxiliaries, and colorants. These are preferably components blended in small amounts as additives and are not particularly limited. Each layer or the composition constituting each layer contains preferably 5% by mass or less, more preferably 1% by mass or less of such additives.

In the step (1), a composite comprising a layer (A) comprising a nonhydrolyzable resin (a1) and a layer (B) comprising a hydrolyzable resin (b1) is brought into contact with a subcritical fluid.

The subcritical fluid refers to a fluid that exists in a liquid state at a temperature and/or pressure lower than but near the critical point. The subcritical fluid is obtained by pressurizing the fluid at a temperature at or above its boiling point. Examples of fluids include water, alcohol, carbon dioxide, and nitrogen. Water is preferred in view of its high ionic product.

The contact means keeping the composite in the subcritical fluid for a certain period of time. The method for bringing the composite into contact with the subcritical fluid is not particularly limited. It is usually performed in a sealed state, and can be performed by a batch method or by a continuous method, but the continuous method is preferred. Preferably, the process is carried out by a method in which the composite is placed in a pressure-resistant reaction container, heated, and maintained under self-pressure or adjusted pressure while the fluid is circulated at a predetermined temperature. Examples of reaction containers include a sealed reaction container, for example, an autoclave and a reaction tube. The heating method is not particularly limited, but examples include a method using a heater or a molten salt bath.

The temperature and pressure of the subcritical fluid during contact are not particularly limited as long as a subcritical fluid is formed. When the subcritical fluid is water, the temperature is preferably 120°C to 374°C and the pressure is preferably 0.2 to 22 MPa. When the subcritical fluid is methanol, the temperature is preferably 85°C to 240°C and the pressure is preferably 0.2 to 8 MPa. When the subcritical fluid is ethanol, the temperature is preferably 95°C to 240°C and the pressure is preferably 0.2 to 6 MPa. When the temperature and pressure of the subcritical fluid are within these ranges, the nonhydrolyzable resin (a2) can be readily recovered while maintaining the molecular weight of the nonhydrolyzable resin (a1), and the recovery ratio of the hydrolyzable resin (b2), which is a resin derived from the hydrolyzable resin (b1), can also be increased.

The contact time (treatment time) is preferably 1 to 60 minutes, and more preferably 1 to 30 minutes. When the contact time is within the above range, the nonhydrolyzable resin (a2) can be readily recovered while maintaining the molecular weight of the nonhydrolyzable resin (a1), and the recovery ratio of the hydrolyzable resin (b2), which is a resin derived from the hydrolyzable resin (b1), can also be increased.

The temperature, pressure, treatment time, and other conditions for contact with the subcritical fluid can be appropriately set according to the type of the nonhydrolyzable resin (a1) and/or the hydrolyzable resin (b1), with reference to the present description. Preferably, the conditions may also be set according to the desired molecular weight of the hydrolyzable resin (b2).

An acid or a base may be added when bringing the composite into contact with the subcritical fluid. However, in order to moderately control the decomposition from the viewpoint of maintaining the molecular weight of the nonhydrolyzable resin (a1) and improving the recovery ratio of the hydrolyzable resin (b1) in the form of a resin, it is preferable not to add an acid or a base. It is more preferable that the contact is carried out under neutral conditions, and it is further preferable that the contact is carried out under conditions at a pH of 6 to 8.

The amount of the subcritical fluid used (i.e., the amount of the raw material subcritical fluid fed into the reaction container) during contact between the composite and the subcritical fluid is adjusted so that the mass ratio of the subcritical fluid to the composite (subcritical fluid/composite) falls within the range of preferably 0.5 to 500, more preferably 1 to 100, and further preferably 5 to 20. When the mass ratio is within the above range, delamination can be smoothly achieved while suppressing the decomposition of the nonhydrolyzable resin.

The layer (A) and the layer (B) are decomposed and/or separated through the step (1). Preferably, the composite is delaminated. For example, the layer (A), the layer (B) and other optional layers are delaminated. The treated liquid obtained after the step (1) contains the nonhydrolyzable resin (a2) and the hydrolyzable resin (b2). The nonhydrolyzable resin (a1) is separated and/or decomposed in the subcritical fluid without being hydrolyzed, and at least part, and preferably all, of the nonhydrolyzable resin (a1) is converted into the solid resin (A) consisting of the nonhydrolyzable resin (a2). The nonhydrolyzable resin (a1) and the nonhydrolyzable resin (a2) are identical or differ only in their molecular weight distribution. In other words, the two are the same type of resin. In the present description, "the resins are identical or differ only in their molecular weight distribution" means that the resins are of the same type, have the same basic structure, and have a molecular weight distribution that is either the same or different. "The resins have the same basic structure" means that even if the resin is partially crosslinked, modified, or substituted, the resin is considered the same as long as its fundamental properties remain unchanged. "The resins differ (only) in their molecular weight distribution" means that, as a result of a change in molecular weight caused by the step (1), the molecular weight distribution is changed. The same applies to the hydrolyzable resin (b2) described below. That is, it would be understood by those skilled in the art that various physical properties correlated with molecular weight naturally vary with changes in molecular weight.

Since the nonhydrolyzable resin (a1) is not hydrolyzable, the nonhydrolyzable resin (a2) has a high retention ratio of the molecular weight of the nonhydrolyzable resin (a1). The retention ratio of the number-average molecular weight of the nonhydrolyzable resin (a2) relative to that of the nonhydrolyzable resin (a1) ((number-average molecular weight Mn4 of the nonhydrolyzable resin (a2) / number-average molecular weight Mn3 of the nonhydrolyzable resin (a1)) * 100) is preferably 80% or more, and more preferably 85% or more.

Furthermore, since the nonhydrolyzable resin (a1) is not hydrolyzable, another feature is that the nonhydrolyzable resin (a2) is not broken into fine forms such as powder. Owing to such high molecular weight retention ratio and morphological characteristics, the solid resin (A) consisting of the nonhydrolyzable resin (a2) is useful as a raw material for material recycling. In addition, when the nonhydrolyzable resin (a1) melts upon contact with the subcritical fluid, the nonhydrolyzable resin (a2) has a high retention ratio of the molecular weight of the nonhydrolyzable resin (a1) as described above, and thus the difference in molecular weight from the hydrolyzable resin (b2) increases. As a result, the viscosity difference between the nonhydrolyzable resin (a2) and the hydrolyzable resin (b2) may increase. In this case, the nonhydrolyzable resin (a2) and the hydrolyzable resin (b2) may be separated using the viscosity difference.

At least part of the hydrolyzable resin (b1) is hydrolyzed upon contact with the subcritical fluid in the step (1), and at least part of it forms a solid resin (B) consisting of the hydrolyzable resin (b2). The hydrolyzable resin (b1) and the hydrolyzable resin (b2) are identical or differ only in their molecular weight distribution. In other words, the two are the same type of resin. It is preferable that the hydrolyzable resin (b1) and the hydrolyzable resin (b2) differ only in their molecular weight distribution.

When the number-average molecular weight of the hydrolyzable resin (b1) is taken as Mn1 and the number-average molecular weight of the hydrolyzable resin (b2) is taken as Mn2, the ratio of Mn2 to Mn1 (Mn2/Mn1) is preferably 0.15 or more, and Mn2 is preferably 2,300 or more.

It is particularly preferable that the hydrolyzable resin (b2) is obtained in the form of fine powder.

Mn2/Mn1 represents the retention ratio of the molecular weight of the hydrolyzable resin (b2), which is derived from the hydrolyzable resin (b1). Thus, the hydrolyzable resin (b2) is obtained by maintaining at least part of the molecular weight of the hydrolyzable resin (b1).

The above value of Mn2 indicates that the hydrolyzable resin (b2) is obtained as a resin. At least part of the hydrolyzable resin (b1) remains as a resin without being decomposed to monomers or oligomers even after the step (1).

Since Mn2/Mn1 and Mn2 are within the above ranges, at least part of the hydrolyzable resin (b1) is recovered as a solid resin (B) having a certain molecular weight. The solid resin (B) may also be used as a raw material for material recycling.

The above ranges of Mn2/Mn1 and Mn2 can be achieved by carrying out the step (1). The above ranges can be achieved by setting the above preferred temperature, pressure, and contact time in the step (1).

As described above, according to the present invention, since the step (1) is included, both the nonhydrolyzable resin and the hydrolyzable resin can be recovered as solid resins, and the method is thus useful for material recycling. Material recycling, compared with chemical recycling in which the resin is decomposed to monomers during recovery, can simplify the process of producing new products and is a highly effective recycling method.

In the method of recovering resin of the present invention, the recovery ratio of the nonhydrolyzable resin (a1) ((mass of the nonhydrolyzable resin (a2) / mass of the nonhydrolyzable resin (a1)) × 100) is preferably 80% or more, more preferably 85% or more, and further preferably 90% or more. According to the method of recovering resin of the present invention, the nonhydrolyzable resin (a1) can be recovered as the nonhydrolyzable resin (a2) which may differ only in molecular weight distribution at a high recovery ratio.

The recovery ratio of the hydrolyzable resin (b1) ((mass of the hydrolyzable resin (b2) / mass of the hydrolyzable resin (b1)) × 100) is preferably 10% or more, more preferably 30% or more, further preferably 50% or more, and particularly preferably 80% or more. According to the method of recovering resin of the present invention, the hydrolyzable resin (b1) can be recovered as the hydrolyzable resin (b2) which may differ only in molecular weight distribution.

As indicated by the above recovery ratios, in the step (1), components other than the nonhydrolyzable resin (a2) and the hydrolyzable resin (b2) may also be formed. For example, components such as monomers and dimers, which constitute the hydrolyzable resin, may be formed. Depending on the layers of the composite, components other than the nonhydrolyzable resin (a2) and the hydrolyzable resin (b2) may also be produced.

<Step (2)>

The method of recovering resin preferably includes, following the step (1), a recovery step (2).

The recovery step (2) includes mode 1 in which the solid resin (A) and the solid resin (B) obtained in the step (1) are sorted and recovered through a filter, and mode 2 in which the solid resin (A) and the solid resin (B) obtained in the step (1) are sorted and recovered according to the difference in specific gravity.

Mode 1 in which the solid resin (A) and the solid resin (B) obtained in the step (1) are sorted and recovered through a filter is as follows.

After the step (1), by cooling the treated liquid, the nonhydrolyzable resin (a2) and the hydrolyzable resin (b2) contained in the treated liquid are preferably obtained as powdery solid resins. Thus, for example, the nonhydrolyzable resin (a2) can be easily sorted and recovered as the solid resin (A), and the hydrolyzable resin (b2) can be easily sorted and recovered as the solid resin (B) without including a step of conducting a fractional distillation method.

The filter is not particularly limited, and examples include filters made of metal, thermoplastic resin, or thermosetting resin.

The vertical and horizontal mesh sizes of the filter are not particularly limited; however, from the viewpoint of facilitating resin sorting, each is preferably independently 10 to 100 μm mesh, and more preferably 20 to 70 μm mesh.

The filter may be a single-stage type or a multi-stage type. In the case of the multi-stage type, it is preferable to use filters with different mesh sizes for each stage, since more effective sorting can be achieved.

Mode 2 in which the solid resin (A) and the solid resin (B) obtained in the step (1) are sorted and recovered according to the difference in specific gravity is as follows.

When the specific gravities satisfy the relationship hydrolyzable resin (b2) > subcritical fluid > nonhydrolyzable resin (a2), the solid resin (A) and the solid resin (B) can be separated based on their specific gravities. Specifically, by cooling in the subcritical fluid, the hydrolyzable resin (b2), which has been molten in the subcritical fluid, precipitates and deposits, while the nonhydrolyzable resin (a2) remains at the surface of the subcritical fluid. The two are then separated.

Preferably, no step other than cooling is included between the step (1) and the step (2).

<Pre-treatment step>

The method of recovering resin may include any optional pre-treatment step before the step (1).

Examples of the pre-treatment step include a step of pulverizing the composite in the form of a molded body. The pulverizing step offers the advantage of increasing the contact area with the subcritical fluid. As pulverizing means, any known pulverizing means may be employed without particular limitation, such as jaw crushers, gyratory crushers, cone crushers, impact crushers, roll crushers, autogenous mills, stamp mills, stone mills, granulators, large shredders, ring mills, roll mills, cutter mills, hammer mills, turbo mills, jet mills, pin mills, centrifugal mills, chopper mills, and other mills or crushers, as well as Rotoplex, pulverizer, and Ultra Rotor. Pulverization may also be performed by a wet process. The composite may also be pulverized in a frozen state. Cutting is also included as a type of pulverization.

Furthermore, as a pre-treatment step, a step of melting the composite in the form of a molded body may be employed. By melting the composite at a temperature at or above the melting point of the resin to be recovered, components that do not melt at that temperature can be separated and removed prior to the step (1). The melting temperature is preferably at or above the melting points of the nonhydrolyzable resin (a1) and the hydrolyzable resin (b1), and such that the thermal degradation of these resins does not occur. Examples of melting means include melt-kneading machines, kneading extruders, and gear pumps.

Examples of the pre-treatment step also include a washing step of washing the composite. When waste plastic is used as the composite, it is particularly preferable to include a washing step.

At least one step selected from the above pulverizing step, melting step, and washing step may be performed. When a plurality of these steps are performed, the melting step is preferably carried out immediately before the step (1), and more preferably the washing step, pulverizing step, and melting step are performed in this order.

<Post-treatment step>

The method of recovering resin may include any optional post-treatment step after the step (1) and the optional step (2).

Examples of the post-treatment step include a step of drying the recovered solid resin (A) and solid resin (B).

The method of recovering resin may also include a step of purifying the recovered solid resin (A) and solid resin (B) after the step (1) and the optional step (2).

<Material recycling>

As the composite used in the method of recovering resin, molded bodies containing two or more types of resins can be used. From the viewpoint of effective utilization of resources, it is preferable that the composite is waste plastic (waste such as used resin molded bodies and defective molded resin products). The waste plastic is not particularly limited, and examples include plastic automobile parts (such as vehicle frames, interior, exterior, window parts, lighting parts such as headlamp covers and reflectors, side mirrors, display parts, safety devices such as seatbelts, airbags, and airbag covers, fuel system components such as tanks, pipes, and pumps, electrical wiring systems such as connectors, and mechanical parts such as gears)", electric devices (e.g., home appliances, personal computers), and plastic parts of portable communication terminals (housings, display components, circuit boards, antennas, etc.), various optical disks, plastic parts for medical or health devices (dialysis units, infusion bags, disposable syringes, fitness equipment, etc.), and various molded bodies such as containers, packaging trays, stationery, toys, furniture, daily necessities, and home appliance casings, as well as packaging films (including packaging for pharmaceuticals such as tablets, powders, and liquids), and plastic bags.

The use of the solid resin recovered from such composites as a raw material for material recycling contributes to the SDGs (Sustainable Development Goals).

Specific examples of material recycling include a method for producing a material-recycled product, comprising conducting material recycling using, as a raw material, the nonhydrolyzable resin (a2) recovered by the method of recovering resin described above. In this method, the nonhydrolyzable resin (a2) is used as a raw material, and, as necessary, a monomer is additionally polymerized and/or other components are mixed, thereby obtaining a material-recycled product. Since the nonhydrolyzable resin (a2) has a high retention ratio of the molecular weight of the nonhydrolyzable resin (a1), the nonhydrolyzable resin (a2) may be used for recycling without polymerization. In this way, a material-recycled product containing the nonhydrolyzable resin (a2) as a raw material can be obtained.

Specific examples of material recycling also include a method for producing a material-recycled product, comprising conducting material recycling using, as a raw material, the hydrolyzable resin (b2) recovered by the method of recovering resin described above. In this method, the hydrolyzable resin (b2) is used as a raw material, and, as necessary, a monomer is additionally polymerized and/or other components are mixed, thereby obtaining a material-recycled product. According to the above method of recovering resin, since at least a part of the hydrolyzable resin (b1) is recovered as the hydrolyzable resin (b2), which is a resin, the step of producing a new product can be simplified compared with chemical recycling, resulting in a more efficient recycling method. In this way, a material-recycled product containing the hydrolyzable resin (b2) as a raw material can be obtained.

The second aspect of the present invention is directed to a method of recovering resin from a molded body comprising a hydrolyzable resin (b1), the method comprising: a step of bringing the molded body into contact with a subcritical fluid to obtain a solid resin (B) consisting of a hydrolyzable resin (b2), wherein the hydrolyzable resin (b1) and the hydrolyzable resin (b2) are identical or differ in their molecular weight distribution.

Examples of the hydrolyzable resin (b1) include those described in the first aspect of the present invention.

The method for bringing the molded body into contact with the subcritical fluid to obtain the solid resin (B) consisting of the hydrolyzable resin (b2) is not particularly limited, and methods similar to those described in the first aspect of the present invention may be employed.

The temperature and pressure of the subcritical fluid during contact are not particularly limited as long as a subcritical fluid is formed. When the subcritical fluid is water, the temperature is preferably 120°C to 374°C and the pressure is preferably 0.2 to 22 MPa. When the subcritical fluid is methanol, the temperature is preferably 85°C to 240°C and the pressure is preferably 0.2 to 8 MPa. When the subcritical fluid is ethanol, the temperature is preferably 95°C to 240°C and the pressure is preferably 0.2 to 6 MPa. When the temperature and pressure of the subcritical fluid are within these ranges, the recovery ratio of the hydrolyzable resin (b2), which is a resin derived from the hydrolyzable resin (b1), can be increased.

The contact time (treatment time) is preferably 1 to 60 minutes, more preferably 1 to 30 minutes, and further preferably 1 to 10 minutes. When the contact time is within the above range, the recovery ratio of the hydrolyzable resin (b2), which is a resin derived from the hydrolyzable resin (b1), can be increased.

Other conditions, such as pH and the amount of subcritical fluid used, are the same as those in the first aspect of the present invention.

At least part of the hydrolyzable resin (b1) is hydrolyzed upon contact with the subcritical fluid, and at least part of it forms a solid resin (B) consisting of the hydrolyzable resin (b2). The hydrolyzable resin (b1) and the hydrolyzable resin (b2) are identical or differ in their molecular weight distribution. In other words, the two are the same type of resin. It is preferable that the hydrolyzable resin (b1) and the hydrolyzable resin (b2) differ in their molecular weight distribution.

When the number-average molecular weight of the hydrolyzable resin (b1) is taken as Mn1 and the number-average molecular weight of the hydrolyzable resin (b2) is taken as Mn2, the ratio of Mn2 to Mn1 (Mn2/Mn1) is preferably 0.15 or more, and Mn2 is preferably 2,300 or more.

The recovery ratio of the hydrolyzable resin (b1) ((mass of the hydrolyzable resin (b2) / mass of the hydrolyzable resin (b1)) $\times$ 100) is preferably 10% or more, more preferably 30% or more, further preferably 50% or more, and particularly preferably 80% or more. According to the method of recovering resin of the present invention, the hydrolyzable resin (b1) can be recovered as the hydrolyzable resin (b2) which may differ only in molecular weight distribution.

The third aspect of the present invention is directed to

a method of recovering resin from a molded body comprising a nonhydrolyzable resin (a1),
the method comprising: a step of bringing the molded body into contact with a subcritical fluid to obtain a solid resin (A) consisting of a nonhydrolyzable resin (a2),
wherein the nonhydrolyzable resin (a1) and the nonhydrolyzable resin (a2) are identical or differ in their molecular weight distribution.

Examples of the nonhydrolyzable resin (a1) include those described in the first aspect of the present invention.

The method for bringing the molded body into contact with the subcritical fluid to obtain the solid resin (A) consisting of the nonhydrolyzable resin (a2) is not particularly limited, and methods similar to those described in the first aspect of the present invention may be employed.

The nonhydrolyzable resin (a1) is separated and/or decomposed in the subcritical fluid without being hydrolyzed, and at least part, and preferably all, of the nonhydrolyzable resin (a1) is converted into the solid resin (A) consisting of the nonhydrolyzable resin (a2). The nonhydrolyzable resin (a1) and the nonhydrolyzable resin (a2) are identical or differ in their molecular weight distribution. In other words, the two are the same type of resin.

Since the nonhydrolyzable resin (a1) is not hydrolyzable, the nonhydrolyzable resin (a2) has a high retention ratio of the molecular weight of the nonhydrolyzable resin (a1). The retention ratio of the number-average molecular weight of the nonhydrolyzable resin (a2) relative to that of the nonhydrolyzable resin (a1) ((number-average molecular weight Mn4 of the nonhydrolyzable resin (a2) / number-average molecular weight Mn3 of the nonhydrolyzable resin (a1)) * 100) is preferably 80% or more, and more preferably 85% or more.

The recovery ratio of the nonhydrolyzable resin (a1) ((mass of the nonhydrolyzable resin (a2) / mass of the nonhydrolyzable resin (a1)) $\times$ 100) is preferably 80% or more, more preferably 85% or more, and further preferably 90% or more. According to the method of recovering resin of the present invention, the nonhydrolyzable resin (a1) can be recovered as the nonhydrolyzable resin (a2) which may differ only in molecular weight distribution at a high recovery ratio.

The second and third aspects of the present invention may include a pre-treatment step and a post-treatment step similar to those in the first aspect of the present invention. The hydrolyzable resin (b2) obtained in the second aspect and the nonhydrolyzable resin (a2) obtained in the third aspect can be suitably used for material recycling in the same manner as in the first aspect of the present invention.

[Examples]

Hereinafter, the present invention will be described in more detail with reference to Examples and Comparative Examples, but the present invention is not limited thereto.

[Example 1]

The following operations were performed using the production apparatus shown in Fig. 1.

A reactor 4 having an internal volume of 50 cm$^3$ which had been removed from the reaction furnace 3 was charged with a pulverized product (10 g) of a "multilayer film in which a polyamide-6 resin layer, a polyethylene (LDPE) resin layer, and an adhesive layer are laminated (polyamide content: 25% by mass)" (number-average molecular weight of the polyamide-6 resin: 15,016; number-average molecular weight of the polyethylene (LDPE) resin: 37,970) as the sample. Stainless-steel mesh filters (55-$\mu$m openings) were installed at the inlet and outlet of the reactor 4.

Degassed purified water was introduced into the reactor 4 to remove air, after which the valves were operated to divert the flow so that the purified water no longer passed through the reactor 4. That is, in this flow path, the purified water passes through pump 1, heating furnace 2, cooling means 5', and back-pressure valve 6. To keep the heated purified water at a constant temperature, the flow rate was adjusted so that the total amount of purified water from the start to the end of the treatment corresponded to a mass ratio of 10 relative to the sample.

The heaters built into the reaction furnace 3 and the heating furnace 2 were turned on. When the temperatures of the reaction furnace 3 and the heating furnace reached 325°C, the reactor 4 was set inside the reaction furnace 3, and the valves were then operated to switch the flow path so that the purified water coming out of the heating furnace 2 passed through the reactor 4. That is, in this flow path, the purified water passes through pump 1, heating furnace 2, reactor 4, cooling means 5, and back-pressure valve 6. The valve was operated to adjust the pressure so that the purified water became subcritical.

The time at which the temperature in the reactor 4 reached 325°C was regarded as the start of the treatment, and the supply of purified water was continued for 30 minutes. The purified water that had passed through the reactor 4 then flowed through the cooling means 5 and was discharged from the system. The discharged purified water was collected continuously for 30 minutes. The purified water discharged from the system was cloudy. After stopping the pump 1, the reactor 4 was removed from the reaction furnace 3 and quenched by immersion in cold water, thereby completing the treatment.

The cloudy purified water was filtered to collect the solid, and the recovery ratio was calculated. The solid in the reactor 4 was also collected and the recovery ratio was calculated.

The recovered solids were identified by ATR infrared spectroscopy. As a result, the solid recovered from the cloudy purified water was polyamide-6 resin, and the solid recovered from the reactor 4 was polyethylene resin.

The number-average molecular weight of the recovered polyamide-6 resin was 2,399.

[Example 2]

The same operations as in Example 1 were performed except that the time at which the temperature in the reactor 4 reached 280°C was regarded as the start of the treatment.

The recovered solids were identified by ATR infrared spectroscopy. As a result, the solid recovered from the cloudy purified water was polyamide-6 resin, and the solid recovered from the reactor 4 was polyethylene resin.

The number-average molecular weight of the recovered polyamide-6 resin was 2,625.

[Reference Example 1]

The same operations as in Example 1 were performed except that 10 g of polyamide-6 resin pellets (number-average molecular weight 14,644) was used as the sample instead of the pulverized product (10 g) of a "multilayer film in which a polyamide-6 resin layer, a polyethylene (LDPE) resin layer, and an adhesive layer were laminated (polyamide content: 25% by mass)".

The cloudy purified water was filtered to collect the solid, and the recovery ratio was calculated.

The recovered solids were identified by ATR infrared spectroscopy. As a result, the solid recovered from the cloudy purified water was polyamide-6 resin.

The number-average molecular weight of the recovered polyamide-6 resin was 2,420.

The results are shown in Table 1.

[Reference Examples 2, 3]

A stainless-steel reaction tube having an internal volume of 10 cm³ was charged with 0.3 g of polyamide-6 resin pellets (product name: UBE Nylon 1030B) as the sample and 3 cm³ of water, and sealed. This reaction tube was placed in a molten salt bath to form subcritical water at the treatment temperature described in Table 1, and the pellets were brought into contact with the subcritical water at that temperature for the treatment time described in Table 1. After the contact treatment with the subcritical water, the reaction tube was cooled with water, and the treated product was recovered. The treatment water was filtered to recover solid, and the recovery ratio was calculated.

The recovered solids were identified by ATR infrared spectroscopy. As a result, the recovered solid was polyamide-6 resin.

The results are shown in Table 1.

[Reference Example 4]

The same operations as in Reference Examples 2, 3 were performed except that 0.3 g of polyethylene terephthalate pellets (product name: Bellpet PBK1) was used instead of 0.3 g of the "polyamide-6 resin pellets" as the sample, and the pellets were brought into contact with subcritical water at the treatment temperature for the treatment time described in Table 2.

The recovered solids were identified by ATR infrared spectroscopy. As a result, the recovered solid was polyethylene terephthalate.

The results are shown in Table 2.

[Reference Examples 5, 6]

The same operations as in Reference Examples 2, 3 were performed except that 0.3 g of polyethylene pellets (LDPE) (product name: UBE POLYETHYLENE F222NH, number-average molecular weight 35,238) was used instead of 0.3 g of the "polyamide-6 resin layer pellets" as the sample, and the pellets were brought into contact with subcritical water at the treatment temperature for the treatment time described in Table 3.

The recovered solids were identified by ATR infrared spectroscopy. As a result, the recovered solid was polyethylene resin.

The results are shown in Table 3.

<Calculation of Recovery Ratio of Recovered Hydrolyzable Resin or Nonhydrolyzable Resin>

The recovery ratio of the resin was calculated using the following equation. The resin amount is expressed in units of mass.

Recovery ratio (%) = (Amount of recovered hydrolyzable resin) / (Amount of hydrolyzable resin in sample before treatment) Recovery ratio (%) = (Amount of recovered nonhydrolyzable resin) / (Amount of nonhydrolyzable resin in sample before treatment)

<Measurement of Average Molecular Weight of Hydrolyzable Resin: Polyamide-6>

The recovered solid hydrolyzable resin, polyamide-6, was subjected to GPC using the following methods under the following conditions to measure the number-average molecular weight Mn2. Similarly, the number-average molecular weight Mn1 of the hydrolyzable resin before the treatment was also measured.

(Measurement of Number-Average Molecular Weight (GPC))

GPC apparatus: HLC-8220GPC (manufactured by Tosoh Corporation, detector: RI)
Column: Shodex HFIP-LG + HFIP-806M $\times$ 2
Eluent: HFIP + 10 mM $CF_3COONa$
Flow rate: 0.8 mL/min
Column temperature: 40°C
Sample concentration: 0.05 wt/vol%

<Measurement of Average Molecular Weight of Hydrolyzable Resin: Polyethylene Terephthalate>

The recovered solid hydrolyzable resin was subjected to NMR using the following method under the following conditions to measure the number-average molecular weight Mn2. Similarly, the number-average molecular weight Mn1 before the treatment was also measured.

(Measurement of Number-Average Molecular Weight (NMR))

NMR apparatus: AL400 manufactured by JEOL Ltd.

(1) Quantification of hydroxyl terminal group

30 mg of the sample was weighed and dissolved in 1.0 mL of CDCl$_3$/HFIP = 1/1 (v/v), and the solution was subjected to $^1$H-NMR measurement.

(2) Quantification of acid terminal group

30 mg of the sample was weighed and dissolved in 1.0 mL of CDCl$_3$/HFIP = 1/1 (v/v) together with 4 mg of triethylamine, and the solution was subjected to $^1$H-NMR measurement.

The number-average molecular weight was calculated according to the following equation. Isophthalic acid and diethylene glycol were also present, but they were excluded from the calculation because they were only present in trace amounts.

$$M_n = \frac{N(60(S_a/4 + S_b/2) + 132(S_c/4 + S_d/2))}{S_a/4 + S_b/2 + S_c/4 + S_d/2}$$

$$N = \frac{S_a/4 + S_b/2 + S_c/4 + S_d/2}{1/2(S_b/2 + S_d/2)}$$

N: Degree of polymerization per molecule
$S_a$: Integral value of ethylene glycol in the main chain
$^1$H-NMR spectra: $\delta$ 4.70 (4, s, backbone -OC$H_2$-)
$S_b$: Integral value of end-group ethylene glycol
$^1$H-NMR spectra: $\delta$ 4.00 (4, s, backbone HOC$H_2$-)
$S_c$: Integral value of terephthalic acid in the main chain
$^1$H-NMR spectra: $\delta$ 8.09 (4, s, backbone aromatic $H$)
$S_d$: Integral value of end-group terephthalic acid
$^1$H-NMR spectra: $\delta$ 7.97 (4, s, end-group aromatic $H$)

<Measurement of Average Molecular Weight of Nonhydrolyzable Resin>

The recovered solid nonhydrolyzable resin was subjected to GPC using the following methods under the following conditions to measure the number-average molecular weight Mn4. Similarly, the number-average molecular weight Mn3 of the nonhydrolyzable resin before the treatment was also measured.

(Measurement of Number-Average Molecular Weight (GPC))

High temperature GPC apparatus: HLC-8321GPC/HT (manufactured by Tosoh Corporation; detector: RI)
Column: TSK gel guard column HHR (S) + TSK gel GMHHR-H (S) HT × 2
Eluent: o-dichlorobenzene
Flow rate: 1.0 mL/min
Column temperature: 145°C
Sample concentration: 0.1 wt/vol%

<Calculation of Molecular Weight Retention Ratio of Recovered Hydrolyzable Resin>

The ratio of the number-average molecular weight Mn2 of the recovered hydrolyzable resin to the number-average molecular weight Mn1 of the hydrolyzable resin before treatment ([Mn2/Mn1] × 100 (%)) was calculated. The results are shown in Tables 1 and 2.

<Calculation of Molecular Weight Retention Ratio of Recovered Nonhydrolyzable Resin>

The ratio of the number-average molecular weight Mn4 of the recovered nonhydrolyzable resin to the number-average molecular weight Mn3 of the nonhydrolyzable resin before treatment ([Mn4/Mn3] × 100 (%)) was calculated. The results are shown in Tables 1 and 3.

[Table 1]

| | Sample | Treatment conditions | | | | Recovered polyethylene resin | | Recovered polyamide resin | | |
| | | Medium | Medium/sample (Mass ratio) | Temperature (°C) | Time (min.) | Recovery ratio (Mass%) | Molecular weight retention ratio (%) | Recovery ratio (Mass%) | Molecular weight retention ratio (%) | Number-average molecular weight |
|---|---|---|---|---|---|---|---|---|---|---|
| Example 1 | PE/PA film | Subcritical water | 10 | 325 | 30 | 100 | 89 | 14 | 16 | 2399 |
| Example 2 | PE/PA film | Subcritical water | 10 | 280 | 30 | 100 | 94 | 33 | 17 | 2625 |
| Reference Example 1 | PA pellets | Subcritical water | 10 | 325 | 30 | 0 | 0 | 17 | 14 | 2420 |
| Reference Example 2 | PA pellets | Subcritical water | 10 | 280 | 30 | 0 | 0 | 44 | 20 | 2903 |
| Reference Example 3 | PA pellets | Subcritical water | 10 | 280 | 5 | 0 | 0 | 92 | 43 | 6263 |

**EP 4 775 624 A1**

According to Examples 1 and 2, it was found that, the nonhydrolyzable resin was recovered with a high molecular weight retention ratio, and the hydrolyzable resin was also recovered as a resin recyclable by material recycling. In Example 2 in which the treatment temperature was 280°C, the recovery ratio and the molecular weight retention ratio of the polyethylene resin and the polyamide resin were higher than those in Example 1, where the treatment temperature was 325°C.

From Reference Example 1, it was found that even when pellets consisting only of the hydrolyzable resin were used, molecular weight retention ratios and recovery ratios similar to those obtained with a composite were achieved.

From Reference Examples 2 and 3, it was found that, in the case of a polyamide resin, the recovery ratio and the molecular weight retention ratio of the hydrolyzable resin were much higher at the treatment temperature of 280°C than in Reference Example 1. In particular, in Reference Example 3 in which the treatment time was 5 minutes, the recovery ratio exceeded 90%, and the molecular weight retention ratio was also high. Based on these results, it can be understood that when the composite used in Example 2 was treated at 280°C for 5 minutes, the recovery ratio was approximately 90% and the molecular weight retention ratio was approximately 40%.

[Table 2]

| | | Treatment conditions | | | | Recovered PET resin | | |
|---|---|---|---|---|---|---|---|---|
| | Sample | Medium | Medium/ sample (Mass ratio) | Temperature (°C) | Time (min.) | Recovery ratio (Mass%) | Molecular weight retention ratio (%) | Number-average molecular weight |
| Reference Example 4 | PET pellets | Subcritical water | 10 | 230 | 5 | 99 | 15 | 2684 |

From Reference Example 4, it was confirmed that even when polyethylene terephthalate was treated alone with subcritical water as the hydrolyzable resin, polyethylene terephthalate was recovered at a high recovery ratio. It can be understood that even when a composite containing polyethylene terephthalate and a nonhydrolyzable resin is treated, polyethylene terephthalate is recovered at a high recovery ratio comparable to that in Reference Examples.

[Table 3]

| | | Treatment conditions | | | | Recovered polyethylene resin | |
|---|---|---|---|---|---|---|---|
| | Sample | Medium | Medium/ sample (Mass ratio) | Temperature (°C) | Time (min.) | Recovery ratio (Mass%) | Molecular weight retention ratio (%) |
| Reference Example 5 | LDPE pellets | Subcritical water | 10 | 280 | 60 | >99 | 112 |
| Reference Example 6 | LDPE pellets | Subcritical water | 10 | 325 | 60 | >99 | 88 |

From Reference Examples 5 and 6, it was found that even when the nonhydrolyzable resin was treated alone with subcritical water, very high recovery ratios and molecular weight retention ratios were obtained. From the results of Reference Example 5, it can be inferred that at a treatment temperature of 280°C, even when a composite containing a hydrolyzable resin and polyethylene resin is treated as in Example 2, the molecular weight retention ratio of the polyethylene resin would increase compared with Example 2 if the treatment time is set longer than in Example 2, for example to 60 minutes. From the results of Reference Example 6, it can be inferred that at a treatment temperature of 325°C, even when a composite containing a hydrolyzable resin and polyethylene resin is treated as in Example 1, the recovery ratio and the molecular weight retention ratio of the polyethylene resin would not increase compared with Example 1, even if the treatment time is set longer than in Example 1, for example 60 minutes.

[Industrial Applicability]

According to the method of recovering resin of the present invention, since both the nonhydrolyzable resin and the hydrolyzable resin can be recovered as resins, the method is useful for recovering nonhydrolyzable resins and hydrolyzable resins contained in waste plastics as raw materials for material recycling.

[Reference Signs List]

1 Pump
2 Heating furnace
3 Reaction furnace
4 Reactor
5 Cooling means
5' Cooling means
6 Back-pressure valve

**Claims**

1. A method of recovering resin from a composite comprising a layer (A) comprising a nonhydrolyzable resin (a1) and a layer (B) comprising a hydrolyzable resin (b1), the method comprising:

   a step (1) of bringing the composite into contact with a subcritical fluid, and decomposing and/or separating the layer (A) and the layer (B) to obtain a solid resin (A) consisting of a nonhydrolyzable resin (a2) and a solid resin (B) consisting of a hydrolyzable resin (b2), wherein the nonhydrolyzable resin (a1) and the nonhydrolyzable resin (a2) are identical or differ only in their molecular weight distribution, and the hydrolyzable resin (b1) and the hydrolyzable resin (b2) are identical or differ only in their molecular weight distribution.

2. The method of recovering resin according to claim 1, further comprising a recovery step (2) of sorting and recovering the solid resin (A) and the solid resin (B) obtained in the step (1) through a filter.

3. The method of recovering resin according to claim 1, further comprising a recovery step (2) of sorting and recovering the solid resin (A) and the solid resin (B) obtained in the step (1) based on a difference in specific gravity between the solid resin (A) and the solid resin (B).

4. The method of recovering resin according claim 1, wherein when the number-average molecular weight of the hydrolyzable resin (b1) is taken as Mn1 and the number-average molecular weight of the hydrolyzable resin (b2) is taken as Mn2, the ratio of Mn2 to Mn1 (Mn2/Mn1) is 0.15 or more, and Mn2 is 2,300 or more.

5. The method of recovering resin according to claim 1, wherein the time for contacting the composite with the subcritical fluid in the step (1) is 1 to 60 minutes.

6. The method of recovering resin according to claim 1, wherein the nonhydrolyzable resins (a1) and (a2) are polyolefin resins.

7. The method of recovering resin according to claim 1, wherein the hydrolyzable resins (b1) and (b2) are polyamide resins or polyester resins.

8. The method of recovering resin according to claim 1, wherein the composite is waste plastic.

9. A method of recovering resin from a molded body comprising a hydrolyzable resin (b1), the method comprising:
   a step of bringing the molded body into contact with a subcritical fluid to obtain a solid resin (B) consisting of a hydrolyzable resin (b2), wherein the hydrolyzable resin (b1) and the hydrolyzable resin (b2) are identical or differ in their molecular weight distribution.

10. A material-recycled product comprising, as a raw material, the nonhydrolyzable resin (a2) recovered by the method of recovering resin according to any one of claims 1 to 8.

11. A material-recycled product comprising, as a raw material, the hydrolyzable resin (b2) recovered by the method of recovering resin according to any one of claims 1 to 9.

12. A method for producing a material-recycled product, comprising conducting material recycling using, as a raw material, the nonhydrolyzable resin (a2) recovered by the method of recovering resin according to any one of claims 1 to 8.

13. A method for producing a material-recycled product, comprising conducting material recycling using, as a raw material, the hydrolyzable resin (b2) recovered by the method of recovering resin according to any one of claims 1 to 9.

Fig. 1

## INTERNATIONAL SEARCH REPORT

| International application No. |
|---|
| **PCT/JP2024/032081** |

| A. | CLASSIFICATION OF SUBJECT MATTER |
|---|---|

***C08J 11/10***(2006.01)i
FI:   C08J11/10

According to International Patent Classification (IPC) or to both national classification and IPC

| B. | FIELDS SEARCHED |
|---|---|

Minimum documentation searched (classification system followed by classification symbols)

C08J11/10,B29B17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2004-358423 A (CHUBU ELECTRIC POWER CO., INC.) 24 December 2004 (2004-12-24) | 1-3, 5-13 |
|   | paragraphs [0010]-[0043], fig. 1, 2 | |
| A | paragraphs [0010]-[0043], fig. 1, 2 | 4 |
| Y | WO 2022/265112 A1 (UBE CORP.) 22 December 2022 (2022-12-22) | 1-3, 5-13 |
|   | paragraphs [0001]-[0128], fig. 1 | |
| A | paragraphs [0001]-[0128], fig. 1 | 4 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/032081**

| Patent document cited in search report | | | Publication date (day/month/year) | Patent family member(s) | | | Publication date (day/month/year) |
|---|---|---|---|---|---|---|---|
| JP | 2004-358423 | A | 24 December 2004 | (Family: none) | | | |
| WO | 2022/265112 | A1 | 22 December 2022 | CN | 117529518 | A | |
| | | | | entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0892411 A
- JP H1135734 A
- JP 2001316518 A
- JP 2023001085 A